# EUROPÄISCHE PATENTSCHRIFT

(11) **EP 1 079 343 B1**
(45) Veröffentlichungstag und Bekanntmachung des Hinweises auf die Patenterteilung: **25.02.2009**
(21) Anmeldenummer: 99123837.9
(22) Anmeldetag: 01.12.1999
(51) Int. Cl.: G07F 15/00

(54) **Versorgungssystem zum Liefern eines Versorgungsmediums, wie Strom, Fernwärme, Gas oder Wasser, an Endverbraucher und Verfahren zum Betreiben desselben**
Distribution system for supplying a commodity, such as power, heating, gas or water, to end-users and method for operating the system
Système de distribution pour la délivrance d'un fluide utilitaire, tel que de l'électricité, du chauffage, du gaz ou de l'eau, à des utilisateurs et méthode pour son exploitation

(30) Priorität: 27.08.1999 DE 19940901
(43) Veröffentlichungstag der Anmeldung: 28.02.2001
(73) Patentinhaber: Wisy, Martin, Dr.-Ing., 24576 Bad Bramstedt (DE)
(72) Erfinder: Wisy, Martin, Dr.-Ing., D-22083 Hamburg (DE)
(74) Vertreter: Richter, Werdermann, Gerbaulet & Hofmann

(56) Entgegenhaltungen:
- EP-A- 0 762 350
- EP-A- 0 852 364
- WO-A-97/39430
- WO-A-98/38844
- WO-A-98/56138
- ANDERSON R J ET AL: "CRYPTOGRAPHIC CREDIT CONTROL IN PRE-PAYMENT METERING SYSTEMS" PROCEEDINGS OF THE SYMPOSIUM ON SECURITY AND PRIVACY. OAKLAND, MAY 8 - 10, 1995, LOS ALAMITOS, IEEE COMP. SOC. PRESS, US, Bd. SYMP. 16, 8. Mai 1995 (1995-05-08), Seiten 15-23, XP000547688 ISBN: 0-7803-2540-0

## Beschreibung

Die Erfindung betrifft ein Versorgungssystem zum Liefern eines Versorgungsmediums, wie Strom, Fernwärme, Gas oder Wasser, an Endverbraucher und ein Verfahren zum Betreiben desselben.

Bisher ist das Energieversorgungsnetz lokal bzw. regional monopolisiert, d.h. es gibt nur einen einzigen lokalen oder regionalen Verteilnetzbetreiber und ein Endverbraucher kann nur von diesem Energie, beispielsweise in Form von Strom, beziehen. Dementsprechend ergeben sich zum Teil hohe Preise für die gelieferte Energie aber auch große regionale Schwankungen bei der Berechnungen eines Grundbetrages durch den Verteilnetzbetreiber.

Mit der zunehmenden Liberalisierung des Energieversorgungsmarktes wird dieses System jedoch verändert werden müssen.

Aus der WO 98 56138 A ist ein Verfahren zum Betreiben eines Versorgungsnetzes für Versorgungsmedien, wie Strom, Fernwärme, Gas oder Wasser bekannt, mit mindestens einem Übertragungsnetz und mindestens einem Verteilnetz, bei dem mindestens ein Verteilnetzbetreiber von mindestens einem Erzeuger eines Versorgungsmediums über das Übertragungsnetz das Versorgungsmedium bezieht und über das Verteilnetz sowie einen Grundzähler an Endverbraucher liefert, wobei in dem Grundzähler und/oder einem Zusatzgerät ein Berechtigungsschlüssel hinterlegt wird, wobei dieser Berechtigungsschlüssel vom Zähler derart ausgewertet wird, dass auf der Grundlage des Berechtigungsschlüssels eine vom Grundzähler und/oder dem Zusatzgerät gezählte oder gespeicherte Menge an Versorgungsmedium dem Verteilnetzbetreiber oder einem Anbieter, insbesondere einem Drittanbieter als Lieferanten zugeschlagen wird.

Es ist Aufgabe der vorliegenden Erfindung, ein verbessertes Verfahren der eingangs genannten Art und ein verbessertes Versorgungssystem zum Liefern eines Versorgungsmediums zur Verfügung zu stellen, welche eine einfache und sichere Auswahl eines Anbieters, insbesondere eines Drittanbieters von Energie oder Wasser erlaubt und mit dem die Möglichkeit geschaffen wird, eine sichere Verifizierung durchzuführen und gleichzeitig ein sicheres Ableseverfahren vorzunehmen.

Diese Aufgabe wird durch ein Verfahren der im Oberbegriff des Anspruches 1 angegebenen Art mit den in diesem Anspruch gekennzeichneten Merkmalen und durch ein Versorgungssystem der im Oberbegriff des Anspruches 8 angegebenen Art mit den in diesem Anspruch gekennzeichneten Merkmalen gelöst.

Dazu ist es bei dem erfindungsgemäßen Verfahren vorgesehen, dass für eine sichere Verifizierung und zum Sicherstellen einer Information des jeweils lokalen Verteilnetzbetreibers über einen Versorgungsmedienliefervertrag zwischen dem Endverbraucher und dem Anbieter, insbesondere Drittanbieter, der Anbieter, insbesondere Drittanbieter, aus vom Endverbraucher an diesen übermittelter Zählernummer, Verteilnetzbetreiberidentifikation und/oder Kontonummer einen ersten Teil des Berechtigungsschlüssels erstellt, überträgt diesen an den Verteilnetzbetreiber gemäß Verteilnetzbetreiberidentifikation, erhält einen mit einem zweiten Teil ergänzten, vollständigen Berechtigungsschlüssel vom Verteilnetzbetreiber zurück und überträgt diesen vollständigen Berechtigungsschlüssel an den Endverbraucher zum Einlesen in den Grundzähler und/oder Zusatzgerät.

Dies hat den Vorteil, dass ohne zusätzliche Verteilnetze ein Anbieter, insbesondere ein Drittanbieter ein Versorgungsmedium an Endkunden über ein jeweils bereits vorhandenes Verteilnetz liefern kann.

Vorzugsweise Weitergestaltungen des Verfahrens sind in den Ansprüchen 2 bis 8 beschrieben.

Einen automatisierten und schnell autorisierten Bezug von Versorgungsmedium von dem Anbieter, insbesondere Drittanbieter, erzielt man dadurch, dass der Berechtigungsschlüssel über eine externe Datenverbindung, beispielsweise eine Verbindung zum Internet oder direkte Verbindung mit dem Anbieter, insbesondere Drittanbieter, übertragen wird.

Zur Information des Endverbrauchers wird von dem Grundzähler und/oder Zusatzgerät aufgrund eines aktuellen, gültigen Berechtigungsschlüssel eine durch den Endverbraucher von dem Anbieter, insbesondere Drittanbieter, gekaufte, noch zu verbrauchende Menge an Versorgungsmedium angezeigt.

Zum zeitlichen Begrenzen der Abnahme von Energie oder Wasser von einem Abnehmer, insbesondere einem Drittanbieter wird von dem Grundzähler und/oder Zusatzgerät eine durch den Endverbraucher von dem Anbieter, insbesondere Drittanbieter, gekaufte und noch zu verbrauchende Menge an Versorgungsmedium auf Null gesetzt, sobald ein in dem Berechtigungsschlüssel enthaltener Zeitpunkt überschritten wird.

Dadurch, dass von dem Grundzähler und/oder Zusatzgerät eine totale, über das Verteilnetz vom Verteilnetzbetreiber übertragene Menge an Verbrauchsmedium sowie ein Anteil der total übertragenen Menge an Versorgungsmedium, welche ein Anbieter, insbesondere Drittanbieter, an den Endverbraucher verkauft hat, angezeigt wird, ist auf einfache Weise aus der Differenz der angezeigten Daten eine vom Verteilnetzbetreiber selbst gelieferte Menge an Versorgungsmediums bestimmbar.

Einen einfachen und schnellen Bezug von Versorgungsmedien von Anbietern, insbesondere Drittanbietern erzielt man dadurch, dass ein Kauf von Versorgungsmedien vom Anbieter, insbesondere Drittanbieter, durch den Endverbraucher über eine externe Datenverbindung, insbesondere über Internet oder eine direkte Datenverbindung mit dem Anbieter, insbesondere Drittanbieter abgewickelt wird.

In einer bevorzugten Weiterbildung der Erfindung wird der Berechtigungsschlüssel beispielsweise manuelle mittels einer Eingabevorrichtung am Grundzähler und/oder Zusatzgerät in diesen eingegeben.

Ferner ist es bei einem Versorgungssystem für Versorgungsmedien erfindungsgemäß vorgesehen, dass endverbraucherseitig eine Gerätesteuerung mit einer internen Datenverbindung zum Grundzähler und/oder Zusatzgerät sowie einer externen Datenverbindung vorgesehen ist, wobei die Gerätesteuerung derart ausgebildet ist, dass sie einen über die externe Datenverbindung erhaltenen Berechtigungsschlüssel im Grundzähler und/oder Zusatzgerät ablegt, wobei ferner der Grundzähler und/oder Zusatzgerät derart ausgebildet ist, dass dieser auf der Grundlage des Berechtigungsschlüssel eine gezählte Menge an Versorgungsmedium dem Verteilnetzbetreiber oder einem Anbieter, insbesondere Drittanbieter, als Lieferanten zuschlägt.

Dies hat den Vorteil, dass ohne zusätzliche Verteilnetze ein Anbieter, insbesondere Drittanbieter, Versorgungsmedien an Endkunden über ein jeweils bereits vorhandenes Verteilnetz liefern kann.

Vorzugsweise Weitergestaltungen des Versorgungssystems sind in den Ansprüchen 10 bis 15 beschrieben.

Beispielsweise ist die interne Datenverbindung eine PLC-Datenverbindung (PLC = Power Line Carrier) und die externe Datenverbindung eine Telekommunikations-, eine TV-Kabelnetz-, eine Satelliten- oder eine Mobilfunkverbindung oder eine PLC-Datenverbindung, wobei die externe Datenverbindung beispielsweise eine Verbindung zum Internet oder eine direkte Verbindung zu einem Anbieter, insbesondere Drittanbieter ist.

Eine Nutzung von ggf. bereits endverbraucherseitig vorhandenen Geräten erzielt man dadurch, dass die Gerätesteuerung eine Haus- bzw. Gebäudesteuerung für Haus- bzw. Gebäudetechnik, beispielsweise ein Personal Computer, ein Fernseher mit Internetanbindung oder ein Adapter zum Verbinden einer Haustechnik mit dem Internet, ist.

Zum Trennen von Mengen an Versorgungsmedien, welche vom Anbieter, insbesondere Drittanbieter, und welche vom lokalen Verteilnetzbetreiber geliefert wurden, umfaßt der Grundzähler und/oder Zusatzgerät ein Total-, ein Vorwärts- und ein Rückwärtszählwerk, wobei das Rückwärtszählwerk ein gemäß aktuellem Berechtigungsschlüssel von einem Anbieter, insbesondere Drittanbieter gekaufte und noch zu verbrauchende Menge an Versorgungsmedium anzeigt, wobei ferner eine Differenz aus Total- und Vorwärtszählwerk eine vom noch abzurechnende Menge an Versorgungsmedium anzeigt.

Zum zeitlichen Begrenzen des Bezugs von Versorgungsmedien von dem Anbieter, insbesondere Drittanbieter weist der Grundzähler und/oder Zusatzgerät eine Zeitauswerteeinrichtung für ein in dem Berechtigungsschlüssel enthaltenes Zeit- bzw. Kalenderdatum auf, wobei der Grundzähler und/oder Zusatzgerät das Rückwärtszählwerk auf Null setzt und das Vorwärtszählwerk stoppt, sobald der im aktuellen Berechtigungsschlüssel enthaltene Zeitpunkt überschritten ist.

Nachstehend wird die Erfindung anhand der beigefügten Zeichnung näher erläutert.

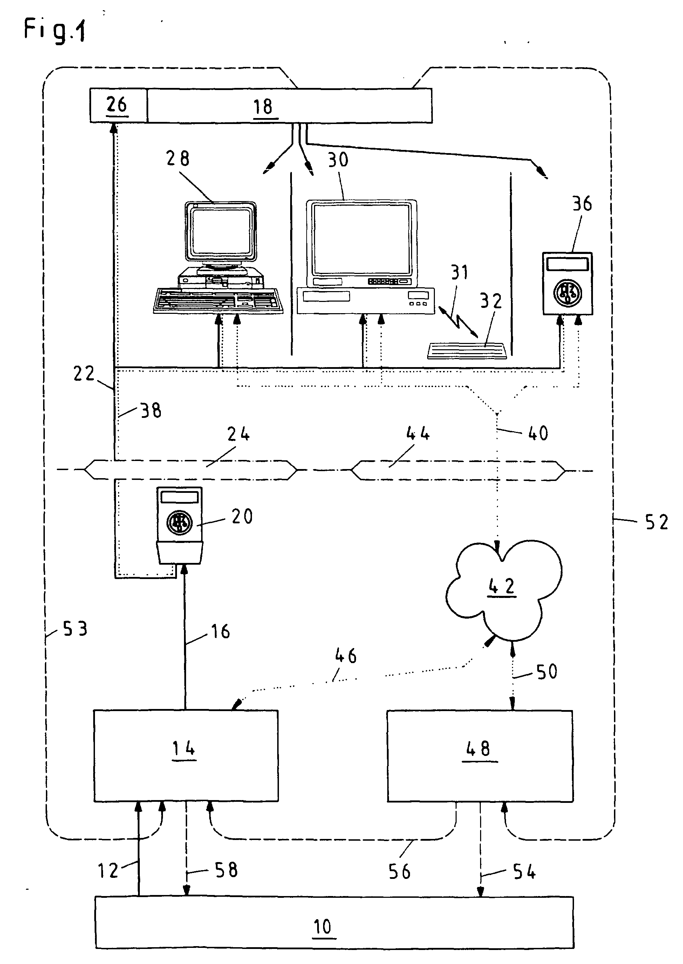

Diese zeigt in Fig. 1 ein schematisches Blockschaltbild eines erfindungsgemäßen Versorgungssystems für Versorgungsmedien, wie Strom, Fernwärme, Gas oder Wasser.

Nachfolgend wird die Erfindung lediglich beispielhaft anhand eines Stromversorgungsnetzes beschrieben. Die Erfindung ist jedoch auf jedes Energieversorgungsnetz und Wassernetz anwendbar, unabhängig davon ob der Energieträger Strom, Gas, Erdgas oder ein erwärmtes Medium, wie Luft oder Wasser, ist. Ferner bezeichnet nachfolgend der Ausdruck Anbieter bzw. Drittanbieter bzw. Direktvertriebs-EVU ein Energieversorgunsunternehmen (EVU), welches Strom an End- bzw. Tarifkunden verkauft, aber selbst weder Erzeuger noch Verteilnetzbetreiber für diesen End- bzw. Tarifkunden ist. Selbstverständlich kann das Direktvertriebs-EVU in einem anderen regionalen bzw. lokalen Bereich als Erzeuger und/oder Verteilnetzbetreiber für andere End- bzw. Tarifkunden tätig sein.

Bei dem in Fig. 1 dargestellten Versorgungssystem liefert ein Stromerzeuger 10 über ein Übertragungsnetz 12 Strom als Energieträger an einen Verteilnetzbetreiber 14, welcher wiederum über ein Verteilnetz 16 diesem Strom an Endverbraucher 18 über einen Grundzähler und/oder Zusatzgerät bzw. Zusatzzähler 20 weitergibt. Der Grundzähler und/oder Zusatzgerät bzw. Zusatzzähler 20 ist über eine Leitung 22, welche ein Eigentumsgrenze 24 zwischen Verteilnetzbetreiber 14 und Endverbraucher 18 überschreitet, mit einer "gewöhnlichen" Elektroinstallation 26 am Ort bzw. im Haus des Endverbrauchers 18 verbunden.

Endverbraucherseitig ist eine Steuerung, wie eine Haussteuerung, vorgesehen, welche beispielsweise wenigstens eine der folgenden Komponenten aufweist, einen Arbeitsplatzrechner 28, wie einen Personal Computer PC oder einen Nachfolger desselben, einen Fernseher 30 mit einer Steuerung 31 und einer Eingabeeinrichtung 32, welche beispielsweise eine Datenverbindung 34 mittels Funk oder Infrarot aufweist, und/oder ein Adapter bzw. "Home Information Terminal" 36 zum Verbinden der Haustechnik bzw. Elektroinstallation 26 mit einer externen Datenverbindung, wie beispielsweise einer Anbindung an das Internet. Mit einer gestrichelten Linie 38 ist eine Datenverbindung zwischen der jeweiligen Steuerung 28, 30 bzw. 36 und der Elektroinstallation 26 sowie dem Zähler 20 angedeutet. Diese Datenverbindung 38 basiert beispielsweise auf einer PLC-Technik (PLC = Power Line Carrier).

Mit gestrichelter Linie 40 ist eine jeweilige Kommunikationsverbindung der Steuerung 28, 30 bzw. 36 mit dem Internet 42 angedeutet, wobei diese Kommunikationsverbindung 40 eine Grenze 44 zwischen dem Endverbraucher 18 und einem externen Telekommunikationsnetz oder einem externen TV-Kabelnetz überschreitet. Die Kommunikationsverbindung 40 ist über Kabel, eine Satellitenverbindung oder eine Mobilfunkverbindung, beispielsweise mit GSM-Standard (GSM = Global System for Mobile Communications), realisiert. Auch der Verteilnetzbetreiber 14 ist über eine Kommunikationsverbindung 46 mit dem Internet 42 verbunden.

Ferner ist ein Anbieter, insbesondere ein Drittanbieter oder Direktvertriebs-EVU (EVU = Energieversorgungsunternehmen) 48 vorgesehen, welcher zwar selbst kein Verteilnetz betreibt, aber eine gewisse Übertragungs- oder Durchleitungs- oder Netzkapazität beim Verteilnetzbetreiber 14 über das Verteilnetz 16 bzw. beim Erzeuger 10 über das Übertragungsnetz 12 sowie eine gewisse Energiemenge beim Erzeuger 10 einkauft und selbst Strom an den Endverbraucher 18 verkauft. Hierbei muß jedoch das Direktvertriebs-EVU 48 keine eigenen Leitungen zum Endkunden 18 bauen, sondern kann vorhandene Netze 12 bzw. 16 nutzen. Auf diese Weise hat der Endverbraucher 18 die Auswahl zwischen zwei oder mehr Anbietern und kann sich ggf. den kostengünstigeren aussuchen. Hierbei kann das Direktvertriebs-EVU 48 durchaus kostengünstiger Strom anbieten, weil dieses beispielsweise in großen Mengen und dadurch kostengünstig Übertragungskapazität bzw. Energie bzw. Durchleitungskapazität einkauft. Ferner kann es für den Verteilnetzbetreiber 14 vorteilhaft sein, Strom über Direktvertriebs-EVU 48 zu vertreiben, da sich der Verteilnetzbetreiber 14 entsprechende Aufwendungen und Kosten für Werbung und direkte Kundenbetreuung wenigstens teilweise erspart und sich ganz auf den Betrieb, die Wartung und Instandhaltung des Verteilnetzes 16 konzentrieren kann. Ferner kann der Verteilnetzbetreiber 14 oder Erzeuger 10 über das Direktvertriebs-EVU 48 ggf. auch an Kunden außerhalb seines regionalen Verteilnetzes 16 Strom liefern, wenn das Direktvertriebs-EVU 48 beispielsweise mit anderen, benachbarten Verteilnetzbetreibern entsprechende Vereinbarungen getroffen hat und die dortigen Stromerzeugungs- bzw. Leitungskapazitäten ggf. nicht zum Decken des Bedarfes ausreichen oder die dortigen Stromkosten höher sind.

Das Direktvertriebs-EVU 48 kauft also Netzkapazität bzw. Energie bzw. Durchleitungskapazität bei dem Verteilnetzbetreiber 14 und/oder Erzeuger 10 ein und veräußert eine über diese gelieferte Strommenge an den Endverbraucher 18 weiter, welcher aber trotzdem nach wie vor lediglich am Verteilnetz 16 seines Verteilnetzbetreibers 14, welcher dann unterschiedlich vom Direktvertriebs-EVU 48 ist, angeschlossen ist. Das Direktvertriebs-EVU 48 bietet dabei erfindungsgemäß den Strom im Internet 42 an, zu dem der Direktvertriebs-EVU 48 eine entsprechende Kommunikationsverbindung 50 unterhält, bzw. eine entsprechende Website mit E-Commerce erstellt, die vom Endkunden 18 anwählbar ist. Ein entsprechender Kauf von Strom durch den Endverbraucher 18 bei dem Direktvertriebs-EVU 48 stellt sich dann wie folgt dar:

In der täglichen Werbung wird auf die aktuellen Strompreise für ein sogn. "Power by Call" hingewiesen und das Direktvertriebs-EVU 48 präsentiert sich als preiswertester Anbieter. Das Angebot lautet dann beispielsweise wie folgt:

| | | |
|---|---|---|
| Mindestabnahme: | 50 kWh, | maximale Abnahmemenge:500 kWh |
| Preis: | 12 Pf/kWh | Dauer der Entnahmezeit:4 Wochen |

Neben der gekauften Strommenge ist also auch die Entnahmezeit begrenzt, wie später noch näher erläutert wird.

Der Endkunde 18 beschließt das Angebot anzunehmen und bestellt mit einer E-mail per Internet zu Beginn der Woche KW 13 bei dem Direktertriebs-EVU 48 250 kWh. Die über das Internet 42 per E-mail an das Direktvertriebs-EVU 48 übermittelte Bestellung umfaßt neben Daten zur Belastung eines Kontos des Endverbrauchers 18 auch eine Eigentumsnummer des Zählers 20 sowie Angaben zur Identifikation desjenigen Verteilnetzbetreibers 14, an dessen Verteilnetz 16 dieser Endkunde 18 angeschlossen ist. Aus diesen Angaben generiert der Direktvertriebs-EVU 48 einen ersten Teil eines Berechtigungsschlüssels, den er beispielsweise ebenfalls über das Internet 42 an den Verteilnetzbetreiber 14 überträgt. Dadurch ist letzterer über den Verkauf von Strom von dem Direktvertriebs-EVU 48 an den Endkunden 18 informiert und generiert seinerseits einen zweiten Teil des Berechtigungsschlüssels und sendet diesen zurück an das Direktvertriebs-EVU 48. Dieses wiederum sendet den vollständigen Berechtigungsschlüssel über das Internet 42 an den Endkunden 18, welcher diesen Berechtigungsschlüssel über die Datenverbindung 38 in den Zähler 20 lädt.

Der Zähler 20 selbst weist ein Totalzählwerk, ein Rückwärtszählwerk und ein Vorwärtszählwerk auf. Alternativ kann auch ein herkömmlicher Zähler 20 lediglich mit einem Totalzählwerk angeschlossen sein, wobei das Rückwärtszählwerk und das Vorwärtszählwerk dann als separate Einheit bzw. Einheiten vorzusehen sind, welche dann ggf. Eigentum des Endverbrauchers 18 sind. Beispielsweise werden diese separaten Einheiten dann auch von dem Direktvertriebs-EVU 48 in Verbund mit einem Stromliefervertrag, welcher entsprechend über eine längere Zeit gebunden ist, an den Endkunden geliefert, wobei dann der Verkaufspreis für diese separate Einheit dann teilweise durch den Stromvertrag subventioniert ist und der Endverbraucher dann einen entsprechend niedrigeren Kaufpreis für diese separate Einheit zahlen muß.

Nach dem Laden des vollständigen Berechtigungsschlüssels in den Zähler 20 prüft dieser die Echtheit bzw. Gültigkeit dieses Schlüssels und stellt ggf. das Rückwärtszählwerk auf die gekaufte Strommenge, also vorliegend auf 250 kWh, und aktiviert das Vorwärtszählwerk. Sobald die gekaufte Strommenge verbraucht ist, also das Rückwärtszählwerk auf Null steht, wird der Vorwärtszähler gestoppt. In dem vollständigen Berechtigungsschlüssel ist neben der gekauften Strommenge (250 kWh) auch ein Kalenderdatum bzw. ein Bezugszeitraum enthalten. Sobald das aktuelle Kalenderdatum nach dem im Berechtigungsschlüssel enthaltenen Kalenderdatum liegt oder sobald der im Berechtigungsschlüssel enthaltene Zeitraum abgelaufen ist, wird der ggf. zu diesem Zeitpunkt noch nicht auf Null stehende Rückwärtszählwerk auf Null gesetzt und das Vorwärtszählwerk gestoppt. Ein eventuelles Resiguthaben verfällt.

Jeglicher Energietransport wird also für den Zeitraum KW 13 bis Ende KW 16 oder bis zum Zählerstand Null des Rückwärtszählwerkes durch ein "Herunterzählen" des Rückwärtszählwerkes und ein "Heraufzählen" des Vorwärtszählwerkes registriert. Das Vorwärtszählwerk registriert somit die tatsächliche Abnahmemenge. Zusätzlich zählt das Totalzählwerk wie gewohnt aufwärts weiter. Dadurch kann jederzeit aus der Differenz des Zählerstandes des Totalzählwerkes und dem Zählerstand des Vorwärtszählwerkes eine vom Verteilnetzbetreiber 14 gelieferte Strommenge bestimmt werden, wobei lediglich diese Differenz dem Endverbraucher 18 vom Verteilnetzbetreiber 14 berechnet wird. Die Strommenge gemäß Vorwärtszählwerk wird vom Direktvertriebs-EVU 48 direkt dem Endverbraucher 18 berechnet. Ggf. bezieht der Endverbraucher 18 im Laufe eines Abrechnungszeitraumes nacheinander Strom von verschiedenen Direktvertriebs-EVU 48, so daß sich die gemäß Vorwärtszählwerk gelieferte Strommenge dann entsprechend der jeweiligen Stromlieferverträge auf die verschiedenen Direktvertriebs-EVU 48 aufteilt. Ggf. ist für jeden Direktvertriebs-EVU 48 ein eigenes Vorwärtszählwerk und optional auch Rückwärtszählwerk vorgesehen.

Die Funktionen der verschiedenen Beteiligten in dem vorstehend beschriebenen, erfindungsgemäßen Energieversorgungsnetz läßt sich wie folgt zusammenfassen: Der Erzeuger bzw. Übertragungsnetzbetreiber 10 erzeugt Strom zur Energieübertragung, transportiert diesen Strom bzw. die Energie zum Verteilnetzbetreiber 14 über das von ihm betriebene Übertragungsnetz 12 und rechnet eine entsprechende Durchleitung mit dem Direktvertriebs-EVU 48 sowie dem Verteilnetzbetreiber 14 ab. Der Verteilnetzbetreiber 14 transportiert den Strom bzw. die Energie zum Endkunden 18, garantiert eine Grundversorgung, rechnet diese mit dem Endkunden 18 ab und rechnet eine Durchleitung mit dem jeweils betroffenen Direktvertriebs-EVU 48 ab. Das Direktvertriebs-EVU 48 biete "Power by Call" bzw. Strom über das internet 42 an, organisiert die Durchleitung vom Erzeuger 10 über den Verteilnetzbetreiber 14 zum Endverbraucher 18 und rechnet per E-Commerce mit dem Endkunden 18 ab.

Somit ergibt sich ein Finanzfluß 52 vom Endkunden 18 zum Direktvertriebs-EVU 48 für "Power by Call" gemäß dem per Internet 42 geschlossenen Vertrag über kurzfristige Stromlieferungen als Wirkung dieses Geschäftes per Internet 42 sowie ein Finanzfluß 53 zum Verteilnetzbetreiber 14 für die Grundversorgung gemäß Netzanschlußvertrag und Stromlieferungsvertrag. Von dem Direktvertriebs-EVU 48 ergibt sich ein Finanzfluß 54 zum Erzeuger 10 gemäß Bezugs- und Durchleitungsverträgen sowie ein Finanzfluß 56 zum Verteilnetzbetreiber 14 gemäß Durchleitungsvertrag. Vom Verteilnetzbetreiber 14 ergibt sich ein Finanzfluß 58 zum Erzeuger 10 gemäß Bezugs- und Durchleitungsverträgen.

Der Verteilnetzbetreiber 14 kann für jeden Endverbraucher bzw. Tarifkunden 18 die aufgetretene Durchleitungsmenge je Abrechnungszeitraum aus dem jeweiligen Zählerstand von Vorwärts- und Rückwärtszählwerk pauschal ermitteln. Zur Abrechnung der Durchleitung mit den einzelnen Direktvertriebs-EVU 48 kennt der Verteilnetzbetreiber 14 die einzelnen, zeitlich begrenzten Stromlieferverträge, da er durch die Erstellung des zweiten Teils des vollständigen Berechtigungsschlüssels entsprechend informiert wurde. Ohne diesen zweiten Teil des Berechtigungsschlüssel würde der Zähler den Berechtigungsschlüssel nicht als gültig akzeptieren und ein Hochsetzen des Rückwärtszählwerkes sowie ein Starten des Vorwärtszählwerkes verweigern.

Bei dem Direktvertriebs-EVU 48 ist ggf. ein Rechenzentrum vorgesehen, welches für eine vollautomatische Bearbeitung der Bestellung via Internet 42 und die daraus abzuleitenden Inkassotätigkeiten sorgt. Zur Kundenbetreuung ist ferner ein Call-Center vorgesehen. Aus den mit den jeweiligen Bestellungen gewonnenen Daten werden vom Rechenzentrum ebenfalls automatisiert erforderliche "Energietransport-Fahrpläne" erstellt, da Zeitraum, Menge und Ort der Leistungsentnahme durch den Endverbraucher 18 ein Teil der Bestellinformation sind. Auf Basis dieser Fahrpläne koordiniert des Direktvertriebs-EVU 48 seinen Bedarf bzgl. Menge und Ziele der Durchleitung mit den Erzeugern bzw. Übertragungsnetzbetreibern 10 sowie den Verteilnetzbetreibern 14. Für die Erzeugung des benötigten Berechtigungsschlüssels wird eine Teilinformation im Berechtigungsschlüssel des jeweils betroffenen Verteilnetzbetreibers 14 als zwingend in das System eingebaut, d.h. der Zähler 20 ist derart ausgebildet, daß er nur dann einen Berechtigungsschlüssel als echt verifiziert, wenn dieser auch den vom Verteilnetzbetreiber erzeugten zweiten Teil enthält. Dies erzwingt den Informationsaustausch zwischen dem Direktvertriebs-EVU 48 und dem jeweils betroffenen Verteilnetzbetreiber 14.

Die Einbindung der Datenverbindung 38 in Form von PLC am Ort des Endverbrauchers 18 erspart aufwendige Installationen in Trafostationen des Verteilnetzbetreibers 14. Ferner ist weniger Aufwand hinsichtlich Datensicherheit erforderlich, da lediglich ein Verteilnetzbaum vom Zähler 20 zur Elektroinstallation 26 des Endkunden 18 notwendig ist. Der Endverbraucher 18 kann sich seine eigenen Schlüssel zum privaten Datenschutz erstellen. Die Verwaltung auf der Ebene des Verteilnetzbetreibers 14 entfällt. Das erfindungsgemäße System ist dem Markt der stark zunehmenden "Home-Automation" geöffnet. Dem Endkunden 18 steht die volle Übertragungsbandbreite der PLC-Technik bereit. Er kann diese auch für Anwendungen im SOHO-Umfeld (SOHO = Small Office Home Office) nutzen.

Es versteht sich, daß der Verteilnetzbetreiber 14 und der Erzeuger 10 auch identisch sein können.

### BEZUGSZEICHENLISTE

- 10: Stromerzeuger
- 12: Übertragungsnetz
- 14: Verteilnetzbetreiber
- 16: Verteilnetz
- 18: Endverbraucher
- 20: Zähler
- 22: Leitung zur Hausinstallation
- 24: Eigentumsgrenze zwischen Verteilnetzbetreiber und Endverbraucher
- 26: Elektroinstallation am Ort bzw. im Haus des Endver- brauchers
- 28: Arbeitsplatzrechner
- 30: Fernseher
- 31: Steuerung
- 32: Eingabeeinrichtung
- 34: Datenverbindung
- 36: Adapter
- 38: Datenverbindung zwischen der jeweiligen Steuerung, der Elektroinstallation und dem Zähler
- 40: Kommunikationsverbindung der Steuerung mit dem Internet
- 42: Internet
- 44: Grenze zwischen dem Endverbraucher und einem externen Telekommunikationsnetz oder einem ex- ternen TV-Kabelnetz
- 46: Kommunikationsverbindung zwischen Verteilnetzbe- treiber und dem Internet

- 48: Drittanbieter oder Direktvertriebs-EVU (EVU = Ener- gieversorgungsunternehmen)
- 50: Kommunikationsverbindung zwischen Direktver- triebs-EVU und Internet
- 52: Finanzfluß vom Endkunden zum Direktvertriebs-EVU
- 53: Finanzfluß vom Endkunden zum Verteilnetzbetreiber
- 54: Finanzfluß vom Direktvertriebs-EVU zum Erzeuger
- 56: Finanzfluß vom Direktvertriebs-EVU zum Verteil- netzbetreiber
- 58: Finanzfluß vom Verteilntzbetreiber zum Erzeuger

## Patentansprüche

1. Verfahren zum Betreiben eines Versorgungsnetzes für Versorgungsmedien, wie Strom, Fernwärme, Gas oder Wasser, mit mindestens einem Übertragungsnetz (12) und mindestens einem Verteilnetz (16), wobei mindestens ein Verteilnetzbetreiber (14) von mindestens einem Erzeuger (10) eines Versorgungsmediums über das Übertragungsnetz das Versorgungsmedium bezieht und über das Verteilnetz sowie einen Grundzähter (20) an Endverbraucher (18) liefert, wobei
in dem Grundzähler und/oder einem Zusatzgerät ein Berechtigungsschlüssel hinterlegt wird, wobei dieser Berechtigungsschlüssel vom Zähler derart ausgewertet wird, dass auf der Grundlage des Berechtigungschlüssels eine vom Grundzähler und/oder dem Zusatzgerät gezählte oder gespeicherte Menge an Versorgungsmedium dem Verteilnetzbetreiber oder einem Anbieter, insbesondere einem Drittanbieter (48) als Lieferanten zugeschlagen wird
**dadurch gekennzeichnet,**
**dass** der Anbieter, insbesondere der Drittanbieter aus vom Endverbraucher an diesen übermittelter Zählernummer, Verteilnetzbetreiberidentifikation und/oder Kontonummer einen ersten Teil des Berechtigungsschlüssels erstellt, an den Verteilnetzbetreiber gemäß Verteilnetzbetreiberidentifikation überträgt, einen ggf. mit einem zweiten Teil ergänzten, vollständigen Berechtigungsschlüssel vom Verteilnetzbetreiber zurückerhält und diesen vollständigen Berechtigungsschlüssel an den Endverbraucher zum Einlesen in den Grundzähler und/oder Zusatzgerät überträgt.

2. Verfahren nach Anspruch 1,
**dadurch gekennzeichnet,**
**dass** der Berechtigungsschlüssel über eine externe Datenverbindung, beispielsweise eine Verbindung zum Internet oder direkte Verbindung mit dem Anbieter, insbesondere dem Drittanbieter, übertragen wird.

3. Verfahren nach einem der vorhergehenden Ansprüche,
**dadurch gekennzeichnet,**
**dass** von dem Grundzähler und/oder Zusatzgerät aufgrund eines aktuellen, gültigen Berechtigungsschlüssels eine durch den Endverbraucher von dem Anbieter, insbesondere dem Drittanbieter, gekaufte, noch zu verbrauchende Menge an Versorgungsmedium angezeigt wird.

4. Verfahren nach einem der vorhergehenden Ansprüche,
**dadurch gekennzeichnet,**
**dass** von dem Grundzähler und/oder Zusatzgerät eine durch den Endverbraucher von dem Anbieter, insbesondere dem Drittanbieter, gekaufte und noch zu verbrauchende Menge an Versorgungsmedium auf Null gesetzt wird, sobald ein in dem Berechtigungsschlüssel enthaltener Zeitpunkt, insbesondere ein Kalenderdatum, überschritten wird.

5. Verfahren nach einem der vorhergehenden Ansprüche,
**dadurch gekennzeichnet,**
**dass** von dem Grundzähler und/oder dem Zusatzgerät eine totale, über das Verteilnetz vom Verteilnetzbetreiber übertragene Menge an Versorgungsmedium sowie ein Anteil der total übertragenen Menge an Versorgungsmedium, welche ein Anbieter, insbesondere ein Drittanbieter, an den Endverbraucher verkauft hat, angezeigt wird.

6. Verfahren nach einem der vorhergehenden Ansprüche,
**dadurch gekennzeichnet,**
**dass** ein Kauf von Energie vom Anbieter, insbesondere vom Drittanbieter, durch den Endverbraucher über eine externe Datenverbindung, insbesondere über Internet oder eine direkte Datenverbindung mit dem Anbieter, insbesondere dem Drittanbieter, abgewickelt wird.

7. Verfahren nach einem der vorhergehenden Ansprüche,
**dadurch gekennzeichnet,**
**dass** der Berechtigungsschlüssel manuell mittels einer Eingabevorrichtung am Grundzähler und/oder Zusatzgerät in diesen manuell eingegeben wird.

8. Versorgungssystem zum Liefern eines Versorgungsmediums, wie Strom, Gas, Fernwärme oder Wasser, an mindestens einen Endverbraucher (18), wobei das Versorgungssystem ein Übertragungsnetz (12) zum Übertragen des Versorgungsmediums von mindestens einem Erzeuger (10) zu einem Verteilnetzbetreiber (14), ein Verteilnetz (16) zum Verteilen des Versorgungsmediums von dem Verteilnetzbetreiber (14) an den oder die Endverbraucher (18) und einen endverbraucherseitig angeordneten Zähler (20) zum Messen von einer an den Endverbraucher (18) gelieferten Menge an Versorgungsmediums umfasst, zur Durchführung des Verfahrens nach einem der Ansprüche 1 bis 7,
**dadurch gekennzeichnet,**
**dass** endverbraucherseitig eine Gerätesteuerung (28; 30; 36) mit einer internen Datenverbindung (38) zum Grundzähler (20) und/oder Zusatzgerät oder einer externen Datenverbindung (40) vorgesehen ist, wobei die Gerätesteuerung (28; 30; 36) derart ausgebildet ist, dass sie einen über die externe Datenverbindung (40) erhaltenen Berechtigungsschlüssel im Grundzähler (20) und/oder Zusatzgerät ablegt, wobei ferner der Grundzähler (20) und/oder Zusatzgerät derart ausgebildet ist, dass dieser auf der Grundlage des Berechtigungsschlüssel eine gezählte Menge an Versorgungsmedium dem Verteilnetzbetreiber (14) oder einem Anbieter, insbesondere einem Drittanbieter (48) als Lieferanten zuschlägt.

9. Versorgungssystem nach Anspruch 8,
**dadurch gekennzeichnet,**
**dass** die interne Datenverbindung (38) eine PLC-Datenverbindung (PLC = Power Line Carrier) ist.

10. Versorgungssystem nach Anspruch 8 oder 9,
**dadurch gekennzeichnet,**
**dass** die externe Datenverbindung (40) eine Telekommunikationsverbindung, insbesondere eine TV-Kabelnetz-, eine Satelliten- oder eine Mobilfunkverbindung oder eine PLC-Datenverbindung ist.

11. Versorgungssystem nach Anspruch 10,
**dadurch gekennzeichnet,**
**dass** die externe Datenverbindung (40) eine Verbindung zum Internet (42) oder eine direkte Verbindung zu einem Anbieter, insbesondere Drittanbieter (48) ist.

12. Versorgungssystem nach einem der Ansprüche 8 bis 11,
**dadurch gekennzeichnet,**
**dass** die Gerätesteuerung (28; 30; 36) eine Haus- bzw. Gebäudesteuerung für Haus- bzw. Gebäudetechnik ist.

13. Versorgungssystem nach einem der Ansprüche 8 bis 12,
**dadurch gekennzeichnet,**
**dass** die Gerätesteuerung ein Personal Computer (28), ein Fernseher (30) mit Internetanbindung und/oder ein Adapter (36) zum Verbinden einer Haustechnik mit dem Internet ist.

14. Versorgungssystem nach einem der Ansprüche 8 bis 13,
**dadurch gekennzeichnet,**
**dass** der Grundzähler (20) und/oder Zusatzgerät ein Total-, ein Vorwärts- und ein Rückwärtszählwerk umfasst, wobei das Rückwärtszählwerk ein gemäß aktuellem Berechtigungsschlüssel von einem Anbieter, insbesondere einem Drittanbieter (48) gekaufte und noch zu verbrauchende Menge an Versorgungsmedium anzeigt, wobei ferner eine Differenz aus Total- und Vorwärtszählwerk eine, ggf. mit dem Grundversorger, noch abzurechnende Menge an Versorgungsmedium anzeigt.

15. Versorgungssystem nach Anspruch 14,
**dadurch gekennzeichnet,**
**dass** der Grundzähler (20) und/oder das Zusatzgerät eine Zeitauswerteeinrichtung für eine in dem Berechtigungsschlüssel enthaltene Zeit bzw. Kalenderdatum aufweist, wobei der Grundzähler und/oder das Zusatzgerät das Rückwärtszählwerk auf Null setzt und das Vorwärtszählwerk stoppt, sobald der im aktuellen Berechtigungsschlüssel enthaltene Zeitpunkt, insbesondere ein Kalenderdatum, überschritten ist.

## Claims

1. A method for operating a supply network for supply media such as electricity, district heating, gas or water, with at least one transmission network (12) and at least one distribution network (16), wherein at least on distribution network operator (14) of at least one generator (10) of a supply medium sources the supply medium via the transmission network, and delivers it to the end consumer (18) via the distribution network and a main meter (20), wherein
in the main meter and/or a supplementary device, an authorisation key is stored, wherein said authorisation key is evaluated by the meter in such a manner that on the basis of said authorisation key, a quantity of the supply medium which is counted or stored by the main meter and/or the supplementary device is granted to the distribution network operator or to a provider, in particular to a third party provider (48) as a supplier **characterized in that** the provider, in particular the third party provider, creates a first part of the authorisation key from the meter number conveyed to him by the end consumer, distribution network operator identification and/or the account number, transmits this to the distribution network operator according to the distribution network operator identification, retrieves a complete authorisation key from the distribution network operator which is supplemented, if necessary, with a second part, and transmits this complete authorisation key to the end consumer to read into the main meter and/or supplementary device.

2. A method according to claim 1, **characterized in that** the authorisation key is transmitted via an external data connection, such as a connection to the Internet or a direct connection to the provider, in particular, a third party provider.

3. A method according to any one of the preceding claims, **characterized in that** the quantity of supply medium which is yet to be consumed on the basis of a current, valid authorisation key, and which is purchased by the end consumer from the provider, in particular, a third party provider, is displayed by the main meter and/or supplementary device.

4. A method according to any one of the preceding claims, **characterized in that** the quantity of supply medium which has been purchased by the end consumer from the provider, in particular a third party provider, and which is yet to be consumed, is set by the main meter and/or supplementary device to zero as soon as a point in time specified in the authorisation key, in particular a calendar date, is exceeded.

5. A method according to any one of the preceding claims, **characterized in that** a total quantity of supply medium which is transmitted via the distribution network by the distribution operator, together with a part of the total quantity of supply medium transmitted which a provider, in particular a third party provider, has sold to the end consumer, is displayed by the main meter and/or supplementary device.

6. A method according to any one of the preceding claims, **characterized in that** a purchase of energy from the provider, in particular the third party provider, by the end consumer is conducted via an external data connection, in particular via the Internet or a direct data connection with the provider, in particular the third party provider.

7. A method according to any one of the preceding claims, **characterized in that** the authorisation key is manually entered by means of an entering device on the main meter and/or supplementary device.

8. A supply system for delivering a supply medium such as electricity, gas, district heating or water to at least one end consumer (18), wherein the supply system comprises one transmission network (12) for transmitting the supply medium from at least one generator (10) to one distribution network operator (14), one distribution network (16) for distributing the supply medium from the distribution network operator (14) to the end consumer/s (18) and one meter (20) arranged on the premises of the end consumer for measuring the quantity of supply medium delivered, in order to conduct the method according to any one of claims 1 to 7, **characterized in that** on the premises of the end consumer, a device control unit (28; 30; 36) with an internal data connection (38) to the main meter (20) and/or the supplementary device, or with an external data connection (40) is provided, wherein the device control unit (20; 30; 36) is designed in such a manner that it stores the authorisation key obtained via the external data connection (40) in the main meter (20) and/or the supplementary device, wherein furthermore, the main meter (20) and/or supplementary device is designed in such a manner that said meter grants a metered quantity of supply medium to the distribution network operator (14) or a provider, in particular a third party provider, on the basis of the authorisation key.

9. A supply system according to claim 8, **characterized in that** the internal data connection (38) is a PLC data connection (PLC = Power Line Carrier).

10. A supply system according to either of claims 8 or 9, **characterized in that** the external data connection (40) is a telecommunications connection, in particular a TV cable network, a satellite or mobile telephone network or a PLC data connection.

11. A supply system according to claim 10, **characterized in that** the external data connection (40) is a connection to the Internet (42) or a direct connection to a provider, in particular a third party provider (48).

12. A supply system according to any one of claims 8 to 11, **characterized in that** the device control unit (28; 30; 36) is a home or building control unit for home or building automation.

13. A supply system according to any one of claims 8 to 12, **characterized in that** the device control unit is a Personal Computer (28), a television (30) with Internet connection and/or an adapter (36) for connecting home appliances to the Internet.

14. A supply system according to any one of claims 8 to 13, **characterized in that** the main meter (20) and/or supplementary device comprises a total, forward and backward meter, wherein the backward meter displays a quantity of supply medium which according to the current authorisation key has been purchased from a provider, in particular a third party provider (48), and which is yet to be consumed, wherein furthermore, a difference between the total meter and the forward meter displays a quantity of supply medium for which, if necessary, the main supplier is yet to be paid.

15. A supply system according to claim 14, **characterized in that** the main meter (20) and/or the supplementary device comprises a time evaluation device for a time period or calendar date contained in the authorisation key, wherein the main meter and/or supplementary device sets the backward meter to zero and stops the forward meter as soon as the point in time, in particular a calendar date, contained in the current authorisation key is exceeded.

## Revendications

1. Procédé d'exploitation d'un réseau d'alimentation pour des produits d'alimentation tels que courant, chauffage urbain, gaz ou eau, avec au moins un réseau de transmission (12) et au moins un réseau de distribution (16), au moins un exploitant du réseau de distribution (14) recevant d'au moins un producteur (10) d'un produit d'alimentation le produit d'alimentation par le biais du réseau de transmission et le livrant à des consommateurs finaux (18) par le biais du réseau de distribution ainsi que par le biais d'un compteur de base (20),
un code d'autorisation étant déposé dans le compteur de base et/ou dans un appareil supplémentaire, ce code d'autorisation étant analysé par le compteur de sorte que, sur la base du code d'autorisation, une quantité du produit d'alimentation comptée ou enregistrée par le compteur de base et/ou par l'appareil supplémentaire est affectée à l'exploitant du réseau de distribution ou à un offrant, en particulier à un offrant tiers (48) en tant que fournisseur, **caractérisé en ce que** l'offrant, en particulier l'offrant tiers, établit, à partir du numéro de compteur, de l'identification de l'exploitant du réseau de distribution, et/ou du numéro de compte transmis par le consommateur final à cet offrant, une première partie de du code d'autorisation, la transmet à l'exploitant du réseau de distribution en fonction de l'identification de l'exploitant du réseau de distribution, reçoit en retour de la part de l'exploitant du réseau de distribution un code d'autorisation entier, complété d'une deuxième partie et transmet ce code d'autorisation entier au consommateur final en vue de l'entrée dans le compteur de base et/ou dans l'appareil supplémentaire.

2. Procédé selon la revendication 1, **caractérisé en ce que** le code d'autorisation est transmis par le biais d'une liaison externe de données, par exemple une liaison à Internet ou une liaison directe, à l'offrant, en particulier à l'offrant tiers.

3. Procédé selon l'une des revendications précédentes, **caractérisé en ce que** une quantité de produit d'alimentation encore à consommer, achetée par le consommateur final à l'offrant, en particulier à l'offrant tiers, est affichée par le compteur de base et/ou l'appareil supplémentaire sur la base d'un code d'autorisation actuel valide.

4. Procédé selon l'une des revendications précédentes, **caractérisé en ce que** une quantité de produit d'alimentation achetée par le consommateur final à l'offrant, en particulier à l'offrant tiers, et encore à consommer est mise à zéro par le compteur de base et/ou l'appareil supplémentaire dès qu'un instant contenu dans le code d'autorisation, en particulier une date du calendrier, est dépassé.

5. Procédé selon l'une des revendications précédentes, **caractérisé en ce que** une quantité totale de produit d'alimentation, transmise via le réseau de distribution par l'exploitant du réseau de distribution, ainsi qu'une fraction de la quantité de produit d'alimentation transmise au total qu'un offrant, en particulier un offrant tiers, a vendu au consommateur final, est affichée par le compteur de base et/ou l'appareil supplémentaire.

6. Procédé selon l'une des revendications précédentes, **caractérisé en ce que** un achat d'énergie à l'offrant, en particulier à l'offrant tiers, est effectué par le consommateur final par le biais d'une liaison externe de données, en particulier via Internet ou via une liaison de données directe avec l'offrant, en particulier avec l'offrant tiers.

7. Procédé selon l'une des revendications précédentes, **caractérisé en ce que**, au moyen d'un dispositif d'entrée sur le compteur de base et/ou l'appareil supplémentaire, le code d'autorisation est entré manuellement dans celui-ci.

8. Système d'alimentation pour la fourniture d'un produit d'alimentation, tel que courant, gaz, chauffage urbain ou eau, à au moins un consommateur final (18), le système d'alimentation comprenant un réseau de transmission (12) pour la transmission du produit d'alimentation au moins depuis un producteur (10) vers un exploitant du réseau de distribution (14), un réseau de distribution (16) pour la distribution du produit d'alimentation par l'exploitant du réseau de distribution (14) au consommateur final (18) ou aux consommateurs finaux (18), et un compteur (20) disposé côté consommateur final pour mesurer une quantité de produit d'alimentation fournie au consommateur final (18), pour la réalisation du procédé selon une des revendications 1 à 7, **caractérisé en ce que**, côté consommateur final, il est prévu une commande d'appareil (28 ; 30 ; 36) avec une liaison interne de données (38) vers le compteur de base (20) et/ou l'appareil supplémentaire ou avec une liaison externe de données (40), la commande d'appareil (28 ; 30 ; 36) étant constituée de sorte qu'elle dépose dans le compteur de base (20) et/ou l'appareil supplémentaire un code d'autorisation reçu via la liaison externe de données (40), le compteur de base (20) et/ou l'appareil supplémentaire étant en outre constitué de sorte qu'il/elle affecte, sur la base du code d'autorisation, une quantité comptée de produit d'alimentation à l'exploitant du réseau de distribution (14) ou à un offrant, en particulier un offrant tiers (48) en tant que fournisseur.

9. Système d'alimentation selon la revendication 8, **caractérisé en ce que** la liaison interne de données (38) est une liaison de données PLC (PLC = Power Line Carrier).

10. Système d'alimentation selon la revendication 8 ou 9, **caractérisé en ce que** la liaison externe de données (40) est une liaison de télécommunication, en particulier une liaison par réseau câblé de télévision, une liaison par satellite ou une liaison par radiocommunication mobile ou une liaison de données PLC.

11. Système d'alimentation selon la revendication 10, **caractérisé en ce que** la liaison externe de données (40) est une liaison à Internet (42) ou une liaison directe avec un offrant, en particulier un offrant tiers (48).

12. Système d'alimentation selon une des revendications 8 à 11, **caractérisé en ce que** la commande d'appareil (28 ; 30 ; 36) est une commande de maison ou de bâtiment pour installation technique des maisons ou des bâtiments.

13. Système d'alimentation selon une des revendications 8 à 12, **caractérisé en ce que** la commande d'appareil est un ordinateur personnel (28), un téléviseur (30) avec connexion Internet et/ou un adaptateur (36) pour connecter une installation technique de maison à Internet.

14. Système d'alimentation selon une des revendications 8 à 13, **caractérisé en ce que** le compteur de base (20) et/ou l'appareil supplémentaire comprend un compteur totalisateur, progressif et un compteur régressif, le compteur régressif affichant une quantité de produit d'alimentation achetée et encore à consommer par un offrant, en particulier un offrant tiers (48), selon le code d'autorisation actuel, une différence du compteur totalisateur et du compteur progressif affichant en outre une quantité encore à décompter, éventuellement avec le fournisseur de base.

15. Système d'alimentation selon la revendication 14, **caractérisé en ce que** le compteur de base (20) et/ou l'appareil supplémentaire présente un équipement d'analyse temporel pour une instant ou une date de calendrier contenu(e) dans le code d'autorisation, le compteur de base et/ou l'appareil supplémentaire mettant à zéro le compteur régressif et arrêtant le compteur progressif dès que l'instant, en particulier une date du calendrier, contenu dans le code d'autorisation actuel est dépassé.
